# EUROPÄISCHE PATENTANMELDUNG

(11) **EP 0 803 393 A2**
(43) Veröffentlichungstag der Anmeldung: **29.10.1997**
(21) Anmeldenummer: 97104037.3
(22) Anmeldetag: 11.03.1997
(51) Int. Cl.: B60K 15/05

(54) **Tankklappe für Kraftfahrzeuge**

(30) Priorität: 24.04.1996 DE 19616315
(71) Anmelder: Mittelhäuser, Bernhard, D-30900 Wedemark (DE)
(72) Erfinder: Hollstein, Manfred, 30900 Wedemark (DE)
(74) Vertreter: Depmeyer, Lothar

(57) **Zusammenfassung**

Die Erfindung geht aus von einer Tankklappe (3), die im geschlossenen Zustand durch einen unter Federspannung stehenden Bolzen (9) gehalten ist, der im zurückgezogenen Zustand ein Verschlusselement (11) der Tankklappe zu deren Öffnung freigibt. Um Griffmulden an der Aussenhaut des Fahrzeuges (1) bzw. der Tankklappe überflüssig zu machen, ist der Tankklappe erfindungsgemäss eine Öffnungsfeder (13) zugeordnet und zudem ist dem Bolzen eine Auflaufschräge (14) in der Weise zugeordnet, dass diese beim Zurückkehren des Bolzens in seine Schliesstellung auf ein Verschlusselement (11,12) der Tankklappe auftrifft und die Tankklappe derart weit aufklappt, dass der Rand (6) der Tankklappe ohne weiteres mit einem Finger erfasst werden kann.

## Beschreibung

Die Erfindung betrifft eine zum Überdecken des Kraftstoffeinfüllstutzens dienende Tankklappe für Kraftfahrzeuge, wobei die Tankklappe im geschlossenen Zustand von einem gegen eine Rückstellkraft z.B. mittels Bowdenzug längsverschiebbaren Bolzen gehalten ist, der im zurückgesogenen Zustand ein Verschlusselement der Tankklappe zum Öffnen der Tankklappe freigibt.

Bei den bekannten Tankklappen dieser Art müssen an der Aussenhaut des Fahrzeuges und/oder an der Tankklappe selbst kleine Griffmulden vorgesehen sein, um die Tankklappe nach Betätigen des vorerwähnten Bolzens manuell öffnen zu können.

Der Erfindunq liegt die Aufgabe zugrunde, die eingangs erwähnten Tankklappen so auszubilden, dass mit der Betätigung des fernbedienbaren Bolzens die Tankklappe selbsttätig in eine solche Offenstellung gelangt, dass der Rand der Tankklappe ohne weiteres vom Benutzer mit dem Finger unterfasst werden kann, um so die Öffnungsbewegung vollenden zu können.

Zur Lösung dieser Aufgabe ist erfindungsgemäss der Tankklappe eine Öffnungsfeder zugeordnet und zudem ist dem Bolzen eine Auflaufschräge zugeordnet, die beim Zurückkehren des Bolzens in die Schliesstellung auf das Verschlusselement auftrifft und dabei die Tankklappe in einem solchen Masse weiter aufklappt, dass der Klappenrand vom Benutzer mit dem Finger unterfasst werden kann.

Demgemäss hat der erwähnte fernbedienbare Bolzen zwei Aufgaben. Einmal dient er als Schliessbolzen. Er arretiert also die Tankklappe im geschlossenen Zustand. Zum anderen wird seine rückläufige Bewegung, also seine Bewegung von der zurückgezogenen Stellung zurück in die Schliesstellung dazu genutzt, um die Tankklappe um ein geringes Mass weiter zu öffnen, und zwar - wie erwähnt - um ein solches Mass, dass der Klappenrand unterfasst werden kann. Es versteht sich, dass unter diesen Voraussetzungen Griffmulden überflüssig werden und die Aussenhaut des Fahrzeuges und die Tankklappe aussen glatt ausgeführt werden können.

Weitere Einzelheiten der Erfindung werden anhand der Zeichnung erläutert, in der ein Ausführungsbeispiel der Erfindung dargestellt ist. Es zeigen :
Fig. 1 einen Teilschnitt durch die Aussenhaut eines Strassenkraftfahrzeuges im Bereich seines Kraftstoffeinfüllstutzens und
Fig. 2 und 3 je Teilschnitte durch die Tankklappe gemäss Fig. 1 im Bereich der Verschlusselemente, wobei gemäss Fig. 2 die Tankklappe bereits geöffnet und gemäss Fig. 3 die Tankklappe noch weiter aufgeklappt ist.

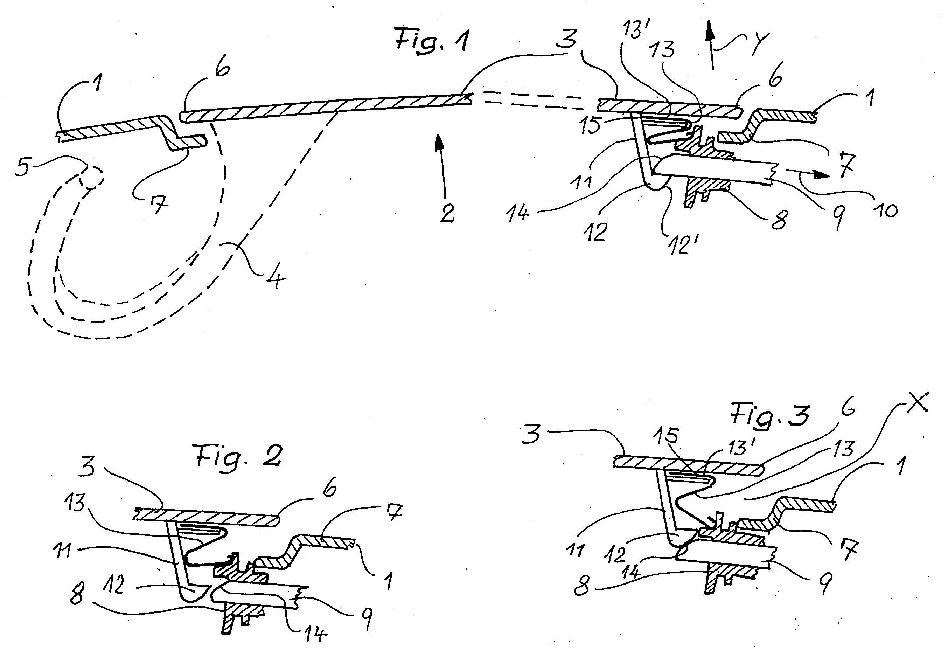

Die Aussenhaut 1 des Fahrzeuges hat eine Durchbrechung 2, über die ein nicht dargestellter Stutzen zum Befüllen des Brennstofftanks zugänglich ist. Diese Durchbrechung 2 wird von einer Tankklappe 3 überdeckt, die am Fahrzeug mittels eines Armes 4 an einer Achse 5 verschwenkbar angeordnet ist. Im geschlossenen Zustand der Tankklappe 3 gemäss Fig. 1 überlappt der Rand 6 der Tankklappe 3 die gestuften Ränder 7, die die Durchbrechung 2 begrenzen. Im Spalt im Bereich der Überlappung können Dichtungen vorgesehen sein.

Nahe unterhalb eines Abschnitts des Randes befindet sich eine am Fahrzeug gelagerte Halterung 8 für einen längsverschiebbbaren Bolzen 9, der in vorgeschobener Stellung gemäss Fig. 1 die Schliesstellung einnimmt, jedoch zur Fernbedienung des Deckelverschlusses mittels Bowdenzug gegen eine nicht dargestellte Feder eine rückziehende Bewegung in Richtung des Pfeiles 10 ausführen kann. Wird der Bowdenzug zum Zwecke der Öffnung der Tankklapee 3 betätigt, so bewegt sich der Bolzen 9 in Richtung des Pfeiles 10. Wird der Bowdenzug entlastet, so versucht der Bolzen 9 in die ursprüngliche Stellung gemäss Fig. 1 zu gelangen.

Am Rand 6 befindet sich ein Verschlusselement 11 in Form eines unten in Richtung auf die Halterung 8 vorspringenden Bauteiles ( der Vorsprung ist mit 12 bezeichnet ). Bei geschlossener Tankklappe 3 gemäss Fig. 1 unterfasst dieser Vorsprung 12 das vordere Ende des Bolzens 9. Ferner ist noch eine s-förmige Blattfeder 13 vorgesehen, die sich oben an der Tankklappe 3 und unten an der Halterung 8 abstützt und im geschlossenen Zustand der Tankklappe 3 gespannt ist.

Zum Öffnen der Tankklappe 3 führt der Bolzen 9 eine rückziehende Bewegung aus. Der Vorsprung 12 findet in dem Bolzen 9 kein Widerlager mehr, und unter der Wirkung der Blattfeder 13 gelangt dann die Tankklappe 3 in die Stellung gemäss Fig. 2. Der mittlerweise in seine Ursprungslage zurückkehrende Bolzen 9 trifft dann mit seiner vorne gelegenen schräg nach hinten oben gerichteten Auflauffläche 14 auf den Vorsprung 12 der durch die Blattfeder 13 oben gehaltenen Tankklappe 3, wobei eine weitere Verschwenkung der Tankklappe 3 entsteht und sich nunmehr zwischen den Rändern 6 und 7 ein solcher Spalt bei x ergibt, dass hier der Benutzer ohne weiteres einen Finger einführen kann, um so die Öffnungsbewegung der Tankklappe 3 im Sinne des Pfeiles y zu vollenden.

Zum Verschliessen der Tankklappe 3 wird diese in die Schliesstellung geklappt, wobei die unten gelegene Schräge 12' des Vorsprunges 12 den Bolzen 9 nach hinten verdrängt. Schliesslich kann der Bolzen 9 wieder einfallen und die Schliesstellung gemäss Fig. 3 einnehmen.

Die Feder 13 wird verständlicherweise beim Zuklappen der Tankklappe 3 gespannt und kann ggfs. auch durch eine andere Feder ersetzt werden. Sie sollte jedoch mit dem oberen Schenkel 13' durch Einführen in eine an der Tankklappe 3 befindliche Tasche 14 gegen Abfallen gesichert sein. Wichtig ist aber in jedem Falle, dass die Feder beim Schliessen der Tankklappe 3 gespannt wird, damit sie später beim Öffnen der Tankklappe 3 die beschriebene Wirkung ( Bildung eines vergrösserten Spaltes ) zustandebringen kann.

Die erfindungsgemässe Verschlussart hat den grossen Vorteil, dass weder am Rand 6 Auswölbungen noch am Rand 7 Einwölbungen erforderlich sind.

## Patentansprüche

1. Zum Überdecken eines Kraftstoffeinfüllstutzens dienende Tankklappe für Kraftfahrzeuge, wobei die Tankklappe im geschlossenen Zustand von einem gegen eine Rückstellkraft längsverschiebbaren Bolzen gehalten ist, der im zurückgezogenen Zustand ein Verschlusselement der Tankklappe zum Öffnen der Tankklappe freigibt, dadurch gekennzeichnet, dass der Tankklappe (3) eine Öffnungsfeder (13) zum Abheben der Tankklappe (3) von ihrer Schliesstellung zugeordnet ist und der Bolzen (9) eine Auflaufschräge (14) aufweist, die beim Zurückkehren des Bolzens (9) in seine Schliesstellung auf ein Verschlusselement (11,12) an der Tankklappe (3) auftrifft und dabei die Tankklappe (3) weiter aufklappt.

2. Tankklappe nach Anspruch 1, dadurch gekennzeichnet, dass das Verschlusselement (11,12) unten eine Schräge (12') aufweist, mit der der Bolzen (9) beim Schliessen der Tankklappe (3) verdrängbar ist.

3. Tankklappe nach Anspruch 1, dadurch gekennzeichnet, dass die Öffnungsfeder (13) eine im wesentlichen s-förmige Blattfeder ist.

4. Tankklappe nach Anspruch 3, dadurch gekennzeichnet, dass ein Schenkel (13') der Blattfeder (13) in einer Tasche (15) der Tankklappe (3) gehalten ist.

5. Tankklappe nach Anspruch 1, dadurch gekennzeichnet, dass ein Ende der Öffnungsfeder (13) an der Tankklappe (3) gehalten ist und das andere Ende dieser Feder in der Halterung (8) für den Bolzen (9) ihr Widerlager findet.

6. Tankklappe nach Anspruch 1, dadurch gekennzeichnet, dass das Verschlusselement(11) sich von der Unterseite der Tankklappe (3) im Winkel zur Tankklappe (3) erstreckt und unten einen sich in Richtung auf die Halterung (8) für den Bolzen (9) erstreckenden Vorsprung (12) aufweist.
